# EUROPÄISCHE PATENTSCHRIFT

(11) **EP 2 219 843 B1**
(45) Veröffentlichungstag und Bekanntmachung des Hinweises auf die Patenterteilung: **22.08.2012**
(21) Anmeldenummer: 08855931.5
(22) Anmeldetag: 02.12.2008
(51) Int. Cl.: B29C 45/00, C08K 3/00, C08K 5/00

(54) **VERFAHREN ZUR HERSTELLUNG VON FORMTEILEN MIT VERRINGERTER BELAGSBILDUNG**
METHOD FOR PRODUCING MOLDED PARTS HAVING REDUCED DEPOSIT FORMATION
PROCÉDÉ DE PRODUCTION DE PIÈCES MOULÉES AVEC FORMATION DE DÉPÔT RÉDUITE

(30) Priorität: 04.12.2007 EP 07122265
(43) Veröffentlichungstag der Anmeldung: 25.08.2010
(73) Patentinhaber: Styrolution GmbH, 60325 Frankfurt am Main (DE)
(72) Erfinder: FISCHER, Wolfgang, 69190 Walldorf (DE); EHRENSTEIN, Moritz, 67063 Ludwigshafen (DE)
(74) Vertreter: Jacobi, Markus Alexander
(86) Internationale Anmeldenummer: PCT/EP2008/066622
(87) Internationale Veröffentlichungsnummer: WO 2009/071537

(56) Entgegenhaltungen:
- EP-A- 0 630 938
- WO-A-01/48070
- DE-A1- 4 408 213

## Beschreibung

Die Erfindung betrifft Verfahren zur Herstellung von Formteilen durch Formgebung thermoplastischer Formmassen F mit verringerter Belagsbildung am Formgebungswerkzeug.

Außerdem betrifft die vorliegende Erfindung die Verwendung von Formmassen F in den erfindungsgemäßen Verfahren sowie Formteile, welche nach den erfindungsgemäßen Verfahren herstellbar sind.

Im Stand der Technik sind die unterschiedlichsten thermoplastischen Formmassen sowie Verfahren zur Herstellung von Formteilen durch Formgebung dieser thermoplastischen Formmassen beschrieben. Bei diesen Formgebungsverfahren werden Kunststoffe aufgeschmolzen und durch Düsen beispielsweise in Formen oder auf Transportbänder gepresst. Ein oftmals auftretendes Problem bei diesen Formgebungsverfahren ist die Bildung von Formbelägen auf den Formgebungswerkzeugen, hier bevorzugt im Anguss- und im Entlüftungsbereich, und/oder auf den Formteiloberflächen. Die Beläge bestehen aus Ausscheidungen aus dem Kunststoff. Sie können z.B. von Verunreinigungen oder Hilfsstoffen aus dem Produktionsprozess herrühren oder von kunststoffüblichen Zusatzstoffen wie Flammschutz-, Gleitmittel oder Pigmenten. Diese Formbeläge können zu einer verschlechterten Oberflächenqualität der Formteile, Problemen beim Bedrucken oder Verkleben und einer schlechten Abformung von Kavitäten führen.

Die WO 98/28344 offenbart beispielsweise Verfahren zur Herstellung thermoplastischer Formmassen, bei denen Pfropfkautschukdispersionen nicht durch Zusatz von Säuren oder Salzen als Koagulantien sondern durch eine spezielle mechanische Scherfällung koaguliert werden. Dadurch werden Verunreinigungen in den thermoplastischen Formmassen, die zu einer Beeinträchtigung der Produkteigenschaften führen können, weitgehend vermieden. Die Gehalte etwaiger Salze, Säuren oder Verunreinigungen werden nicht offenbart. Ebensowenig werden Angaben zur Formteilherstellung aus diesen thermoplastischen Formmassen gemacht.

Die DE 44 08 213 A1 beschreibt ABS-Formmassen enthaltend 0,001 bis 0,3 Gew.-% spezieller Salze, darunter auch bestimmte Magnesium- und Calciumverbindungen. Die Verarbeitung dieser ABS-Formmassen bei höherer Temperatur zu einem Formteil soll mit verringerter Verfärbung und damit einer verbesserten Eigenfarbe der Polymere möglich sein. Weitere mögliche Schwierigkeiten bei der Formteilherstellung, insbesondere eine Verringerung der Formbelagsbildung, werden nicht diskutiert.

Der in WO 02/42347 offenbarten Erfindung liegt die Aufgabe zugrunde, Formbeläge bei der Formteilherstellung zu verhindern. Die Lösung dieser Aufgabe besteht gemäß dieser Schrift im Zusatz eines pH-Puffersystems nach Beendigung der Polymerisation des kautschukelastischen Polymerisats. Die Mengenanteile etwaiger Magnesium- oder Calciumverbindungen in den dergestalt hergestellten thermoplastischen Formmassen werden nicht offenbart.

Auch der in WO 01/48070 offenbarten Erfindung liegt die Aufgabe zugrunde, Formbeläge bei der Formteilherstellung zu minimieren bzw. verhindern. Die Lösung dieser Aufgabe besteht gemäß dieser Schrift im Zusatz von 0,02 bis 10 Gew.-% eines Magnesiumoxids (entsprechend 120 bis 60 000 mg/kg Mg), welches eine Zitronensäurezahl von < 1.500 sek aufweist, als Additiv bei der Formteilherstellung.

Gemäß der Lehre von EP 630 938 A1 weisen flammgeschützte thermoplastische Formmassen beim Spritzgießen zu Formteilen eine einheitliche Oberfläche ohne Verfärbungen, Ausblühungen und Ausgasung auf, wenn das eingesetzte Flammschutzmittel einen Magnesiumgehalt von 50 mg/kg oder weniger aufweist. Daß der Magnesiumgehalt der gesamten thermoplastischen Formmasse im Hinblick auf die Lösung der zugrunde liegenden Aufgabe eine Bedeutung haben könnte, ist der Schrift nirgends zu entnehmen.

Aufgabe der vorliegenden Erfindung war es, Verfahren zur Herstellung von Formteilen durch Formgebung thermoplastischer Formmassen bereit zu stellen, die gegenüber den bekannten Verfahren eine verringerte Belagsbildung am Formgebungswerkzeug und/oder der Formteiloberfläche aufweisen.

Demgemäß wurden die eingangs definierten Verfahren gefunden, wobei erfindungswesentlich ist, daß die thermoplastischen Formmassen F Magnesium- und/oder Calciumverbindungen in einer Menge von 0 mg/kg bis 100 mg/kg (gerechnet als Summe der mg Mg und der mg Ca pro kg thermoplastischer Formmasse F und bestimmt mittels Atomemissionsspektrometrie mit induktiv gekoppeltem Plasma (ICP-AES)) enthalten.

Die erfindungsgemäßen Verfahren zur Herstellung von Formteilen durch Formgebung thermoplastischer Formmassen F weisen gegenüber den bekannten Verfahren eine verringerte Belagsbildung am Formgebungswerkzeug und/oder der Formteiloberfläche auf.

Die erfindungsgemäßen Verfahren sowie die weiteren erfindungsgemäßen Verwendungen und Gegenstände werden im folgenden beschrieben.

Erfindungswesentlich ist, daß zur Herstellung der Formteile durch Formgebung thermoplastische Formmassen F als Einsatzstoff eingesetzt werden, die bis 75 mg/kg, insbesondere von 5 mg/kg bis 50 mg/kg (jeweils gerechnet als Summe der mg Mg und der mg Ca pro kg thermoplastischer Formmasse F) enthalten Die Magnesium- und Calciumgehalte der thermoplastischen Formmassen werden mit tels Atomemissionsspektrometrie mit induktiv gekoppeltem Plasma (ICP-AES) bestimmt werden; diese Methode ist dem Fachmann bekannt und in der Literatur beschrieben.

Bevorzugt einsetzbare Magnesium- und/oder Calciumverbindungen sind Magnesiumoxid, Magnesiumhydroxid, Magnesiumsulfat, Magnesiumcarbonat, Magnesiumstearat, Calciumhydroxid, Calciumcarbonat, Calciumsulfat, Calciumstearat oder Mischungen aus zwei oder mehr der genannten Verbindungen. Besonders bevorzugt sind Magnesiumsulfat und Magnesiumstearat.

Die thermoplastischen Formmassen F können als Kunststoffkomponente grundsätzlich alle dem Fachmann bekannten und in der Literatur beschriebenen thermoplastischen Polymere enthalten; auch Mischungen aus mehreren dieser thermoplastischen Polymere sind geeignet.

Geeignete thermoplastische Polymere sind z.B.:
- Polyolefine wie Polyethylen und Polypropylen,
- Polyvinylchlorid,
- Styrolpolymere wie Polystyrol (schlagfest oder nicht schlagfest modifiziert),
- schlagzähmodifizierte vinylaromatische Copolymere wie ABS (Acrylnitril-Butadien-Styrol), ASA (Acrylnitril-Styrol-Acrylat) und MABS (transparentes ABS, enthaltend Methacrylat-Einheiten),
- Styrol-Butadien-Blockcopolymere ("SBC"), insbesondere thermoplastische Elastomere auf Basis von Styrol ("S-TPE"),
- Polyamide,
- Polyester wie Polyethylenterephthalat (PET), Polyethylenterephthalat-Glycol (PETG) und Polybutylenterephthalat (PBT),
- Polycarbonat (z.B. Makrolon^{®} der Bayer AG),
- Polymethylmethacrylat (PMMA),
- Poly(ether)sulfone und
- Polyphenylenoxid (PPO).

Als Kunststoffkomponente der thermoplastischen Formmassen F bevorzugt einsetzbare thermoplastische Polymere sind ein oder mehrere Polymere ausgewählt aus der Gruppe ASA, ABS, Polyamide und Polyester.

Bevorzugte schlagzäh modifizierte vinylaromatische Copolymere sind schlagzäh modifizierte Copolymerisate aus vinylaromatischen Monomeren und Vinylcyaniden (SAN). Bevorzugt werden als schlagzähmodifiziertes SAN ASA-Polymerisate und/oder ABS-Polymerisate eingesetzt, sowie (Meth)acrylat-Acrylnitril-Butadien-Styrol-Polymerisate ("MABS", transparentes ABS), aber auch Blends von SAN, ABS, ASA und MABS mit anderen Thermoplasten wie Polycarbonat, Polyamid, Polyethylenterephthalat, Polybutylenterephthalat, PVC, Polyolefinen.
Unter ASA-Polymerisaten werden im allgemeinen schlagzähmodifizierte SAN-Polymerisate verstanden, bei denen kautschukelastische Pfropfcopolymerisate von vinylaromatischen Verbindungen, insbesondere Styrol, und Vinylcyaniden, insbesondere Acrylnitril, auf Polyalkylacrylatkautschuken in einer Copolymermatrix aus insbesondere Styrol und/oder α-Methylstyrol und Acrylnitril vorliegen. ASA-Polymerisate sind dem Fachmann bekannt und in der Literatur beschriebenen, beispielsweise in DIN EN ISO 6402-1 DE vom Februar 2003.
Unter ABS-Polymerisaten werden im allgemeinen schlagzähmodifizierte SAN-Polymerisate verstanden, bei denen Dien-Polymerisate, insbesondere 1,3-Polybutadien, in einer Copolymermatrix aus insbesondere Styrol und/oder α-Methylstyrol und Acrylnitril vorliegen. ABS-Polymerisate sind dem Fachmann bekannt und in der Literatur beschriebenen, beispielsweise in DIN EN ISO 2580-1 DE vom Februar 2003.

Als Kunststoffkomponente der thermoplastischen Formmassen F außerdem bevorzugt einsetzbare thermoplastische Polymere sind teilkristalline Polyolefine, wie Homo- oder Copolymerisate von Ethylen, Propylen, Buten-1, Penten-1, Hexen-1, 4-Methyl-penten-1 sowie Ethylencopolymerisate mit Vinylacetat, Vinylalkohol, Ethylacrylat, Butyl-acrylat oder Methacrylat. Bevorzugt wird ein High-Density-Polyethylen (HDPE), Low-Density-Polyethylen (LDPE), Linear-Low-Density-Polyethylen (LLDPE), Polypropylen (PP), Ethylen-Vinylacetat-Copolymerisat (EVA) oder Ethylen-Acryl-Copolymerisat eingesetzt. Insbesondere bevorzugt ist Polypropylen.

Als Kunststoffkomponente der thermoplastischen Formmassen F ebenfalls bevorzugt einsetzbare thermoplastische Polymere sind Polycarbonate. Die Polycarbonate haben vorzugsweise ein Molekulargewicht (Gewichtsmittelwert M_{w}, bestimmt mittels Gelpermeationschromatographie in Tetrahydrofuran gegen Polystyrolstandards) im Bereich von 10 000 bis 60 000 g/mol. Sie sind z.B. entsprechend den Verfahren der DE-B-1 300 266 durch Grenzflächenpolykondensation oder gemäß dem Verfahren der DE-A-1 495 730 durch Umsetzung von Diphenylcarbonat mit Bisphenolen erhältlich. Bervorzugtes Bisphenol ist 2,2-Di(4-hydroxyphenyl)propan, im allgemeinen - wie auch im folgenden - als Bisphenol A bezeichnet.
Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfan, 4,4'-Dihydroxydiphenylether, 4,4'-Dihydroxydiphenylsulfit, 4,4'-Dihydroxydiphenylmethan, 1,1-Di-(4-hydroxyphenyl)ethan, 4,4-Dihydroxydiphenyl oder Dihydroxydiphenylcycloalkane, bevorzugt Dihydroxydiphenylcyclohexane oder Dihydroxylcyclopentane, insbesondere 1,1-Bis(4-hydroxyphenyl)-3,3,5-trimethylcyclohexan sowie Mischungen der vorgenannten Dihydroxyverbindungen.
Besonders bevorzugte Polycarbonate sind solche auf der Basis von Bisphenol A oder Bisphenol A zusammen mit bis zu 80 Mol-% der vorstehend genannten aromatischen Dihydroxyverbindungen.
Besonders gut geeignete Polycarbonate sind solche, die Einheiten enthalten, welche sich von Resorcinol- oder Alkylresorcinolestern ableiten, wie sie beispielsweise in WO 00/61664, WO 00/15718 oder WO 00/26274 beschrieben werden; solche Polycarbonate werden beispielsweise von General Electric Company unter der Marke SollX^{®} vertrieben.
Es können auch Copolycarbonate gemäß der US-A 3 737 409 verwendet werden; von besonderem Interesse sind dabei Copolycarbonate auf der Basis von Bisphenol A und Di-(3,5-dimethyl-dihydroxyphenyl)sulfon, die sich durch eine hohe Wärmeformbeständigkeit auszeichnen. Ferner ist es möglich, Mischungen unterschiedlicher Polycarbonate einzusetzen.

Bevorzugt ist in den thermoplastischen Formmassen F als thermoplastisches Polymer jedes aromatische oder aliphatische thermoplastische Polyurethan geeignet, bevorzugt sind amorphe aliphatische thermoplastische Polyurethane geeignet, die transparent sind. Aliphatische thermoplastische Polyurethane und deren Herstellung sind dem Fachmann bekannt, beispielsweise aus EP-B1 567 883 oder DE-A 10321081, und kommerziell verfügbar, beispielsweise unter den Marken Texin^{®} und Desmopan^{®} der Bayer Aktiengesellschaft.

Die thermoplastischen Formmassen F können alle dem Fachmann bekannten und in der Literatur beschriebenen kunststoffüblichen Zusatzstoffe enthalten. Bevorzugt enthalten diese kunststoffüblichen Zusatzstoffe im Wesentlichen keine Magnesium-und/oder Calciumverbindungen. Der Begriff "im Wesentlichen keine" bedeutet, dass der Gehalt an Magnesium-und/oder Calciumverbindungen in den kunststoffüblichen Zusatzstoffen unterhalb der Nachweisgrenze der ICP-AES-Analysemethode liegt.

Kunststoffübliche Zusatzstoffe im Sinne der vorliegenden Erfindung sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher sowie Fasern, beispielsweise Glasfasern oder Kohlenstofffasern.

Oxidationsverzögerer und Wärmestabilisatoren, die der thermoplastischen Formmasse F gemäß der Erfindung zugesetzt werden können, sind z. B. Halogenide von Metallen der Gruppe I des Periodensystems, z. B. Natrium-, Kalium-, Lithium-Halogenide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der thermoplastischen Formmassen F, einsetzbar.

Beispiele für UV-Stabilisatoren sind verschiedene substituierte Resorcine, Salicylate, Benzotriazole und Benzophenone, die im Allgemeinen in Mengen bis zu 2 Gew.-%, bezogen auf das Gewicht der thermoplastischen Formmassen F, eingesetzt werden.

Gleit- und Entformungsmittel, die in der Regel in Mengen bis zu 1 Gew.-%, bezogen auf das Gewicht der thermoplastischen Formmassen F, zugesetzt werden können, sind Stearinsäure, Stearylalkohol, Stearinsäurealkylester und -amide sowie Ester des Pentaerythrits mit langkettigen Fettsäuren. Es können auch Salze des Zinks oder Aluminiums der Stearinsäure sowie Dialkylketone, z. B. Distearylketon, eingesetzt werden. Erfindungsgemäß geeignet sind insbesondere Stearate sowie N,N'-Ethylen-bisstearamid.

Als Glasfasern können in den erfindungsgemäßen Formmassen F alle dem Fachmann bekannten und in der Literatur beschriebenen Glasfasern eingesetzt werden (siehe beispielsweise Milewski, J.V., Katz, H.S. "Handbook of Reinforcements for Plastics", S. 233 ff., Van Nostrand Reinholt Company Inc, 1987).

In den erfindungsgemäßen Verfahren besonders bevorzugt einsetzbare thermoplastischen Formmassen F enthalten neben der mindestens einen Magnesium- und/oder Calciumverbindung
A) 20 bis 100 Gew.-%, bevorzugt 30 bis 100 Gew.-%, besonders bevorzugt 40 bis 100 Gew.-%, mindestens eines schlagzähmodifizierten vinylaromatischen Copolymers ausgewählt aus der Gruppe Acrylnitril-Butadien-Styrol-Copolymere (ABS), Acrylnitril-Styrol-Acrylat-Copolymere (ASA) und Methacrylat-Acrylnitril-Butadien-Styrol-Copolymere (MABS),
B) 0 bis 80 Gew.-%, bevorzugt 0 bis 70 Gew.-%, besonders bevorzugt 0 bis 60 Gew.-%, mindestens eines Polycarbonats (PC) und
C) 0 bis 60 Gew.-%, bevorzugt 0 bis 45 Gew.-%, besonders bevorzugt 0 bis 25 Gew.-%, weiterer kunststoffüblicher Zusatzstoffe enthalten,
wobei die Gewichtsprozente jeweils auf das Gesamtgewicht der Komponenten A) bis C) bezogen sind und zusammen 100 Gew.-% ergeben.

Die thermoplastischen Formmassen F können nach dem Fachmann bekannten und in der Literatur beschriebenen Verfahren, insbesondere durch Schmelzevermischung der thermoplastischen Polymere, der Magnesium- und/oder Calciumverbindung und ggf. der kunststoffüblichen Zusatzstoffe in einem Schneckenextruder, hergestellt werden.

Als Schneckenextruder können Einschneckenextruder oder Doppelschneckenextruder, die gleichsinnig drehend und ineinandergreifend, als auch gegenläufig kämmend sowie nicht kämmend sein können, verwendet werden. Bevorzugt werden Doppelschneckenextruder eingesetzt. Besonders bevorzugt sind gleichsinnig drehende, kämmende Doppelschneckenextruder. Geeignete Schneckenextruder sind beispielsweise in Saechtling, Kunststoff-Taschenbuch, Hanser Verlag, München, Wien, Ausgabe 26, 1995, Seiten 191 bis 246, beschrieben.

Bei den erfindungsgemäßen Verfahren zur Herstellung von Formteilen durch Formgebung thermoplastischer Formmassen F erfolgt die Formgebung bevorzugt durch Extrusion, insbesondere Extrusion zu Granulat, Folien, Platten, Strängen oder Profilen, oder durch Spritzguß zu Formkörpern; besonders bevorzugt ist der Spritzguß zu Formkörpern. Die genannten Verfahren der Extrusion und des Spritzguß sowie die dabei verwendeten Vorrichtungen sind als solche dem Fachmann bekannt und in der Literatur beschrieben.

Durch den Einsatz der thermoplastischen Formmassen F enthaltend Magnesium-und/oder Calciumverbindungen in der oben genannten Menge bei den erfindungsgemäßen Verfahren wird gegenüber den bekannten Verfahren zur Formgebung eine verringerte Belagsbildung am Formgebungswerkzeug erreicht.

Besonders bevorzugte Formteile, die sich nach den erfindungsgemäßen Verfahren herstellen lassen, sind beispielsweise Haushaltsartikel, elektronische Bauteile, medizinische Geräte, Kfz-Bauteile und Baumaterialien, insbesondere spritzgegossene Chipkarten und Spielbausteine, Gehäuse für elektrische und elektronische Teile, beispielsweise Küchenmaschinen, Rasierapparate, Telephone, Staubsauger, Monitorgehäuse, Tastaturen, Elektro-Rasenmäher, Spielzeugeisenbahnen, Waschmaschinen, Geschirrspüler, Kühlschränke, Teile für den Innenraum von Kraftfahrzeugen, und für den Außeneinsatz an Kraftfahrzeugen, beispielsweise Radkappen, Außenspiegel (eingefärbt, lackiert oder galvanisiert), Kühlergrills und Spoiler.

Die nach den erfindungsgemäßen Verfahren herstellbaren Formteile weisen durch die verringerte Belagsbildung bei der Formgebung eine -gegenüber nach bekannten Verfahren herstellbaren Formteilen- eine verbesserte Oberflächenqualität auf.

Die Erfindung wird nachstehend anhand von Beispielen näher erläutert.

### Beispiele:

Beispiele mit vorangestelltem "V-" sind nicht erfindungsgemäß und dienen zum Vergleich.

### Einsatzstoffe, Formmassen F und Vergleichsformmassen V-F, sowie deren Herstellung:

Formmassen mit vorangestelltem "V-" sind nicht erfindungsgemäß und dienen zum Vergleich.

### Herstellung von Pfropfkautschuken:

### Herstellung eines Butadien-Pfropfkautschuks A:

In einer Lösung von 0,6 Gew.-Teilen tert.-Dodecylmercaptan, 0,7 Gew.-Teilen Kaliumstearat als Emulgator, 0,2 Gew.-Teilen Kaliumperoxodisulfat und 0,2 Gew.-Teilen Natriumhydrogencarbonat in 80 Gew.-Teilen Wasser wurden bei 65°C 60 Gew.-Teile Butadien bis zu einem Monomerenumsatz von 98 Gew.-% polymerisiert. Der erhaltene Latex wurde durch Zusatz von 2,5 Gew.-Teilen einer 10 gew.-%-igen Emulsion eines Copolymeren aus 96 Gew.-% Ethylacrylat und 4 Gew.-% Methacrylamid agglomeriert. Zur so erhaltenen Dispersion wurden 40 Gew.-Teile Wasser, 0,4 Gew.-Teile Kaliumstearat und 0,2 Gew.-Teile Kaliumperoxodisulfat gegeben. Anschließend wurden 40 Gew.-Teile einer Mischung von 70 Gew.-% Styrol und 30 Gew.-% Acrylnitril innerhalb von 4 Stunden zugegeben und der Ansatz unter Rühren bei 70°C gehalten. Nach Beendigung der Pfropfmischpolymerisation wurde der Butadien-Pfropfkautschuk mittels Magnesiumsulfatlösung bei 89°C aus der Dispersion gefällt und im warmen Luftstrom getrocknet.

### Herstellung eines Butadien-Pfropfkautschuks B:

Die Herstellung des Butadien-Pfropfkautschuks B erfolgte bis zur Beendigung der Pfropfmischpolymerisation wie bei der Herstellung des Butadien-Pfropfkautschuks A beschrieben. Die anschließende Fällung des Butadien-Pfropfkautschuks B aus der Dispersion erfolgte jedoch nicht mittels Magnesiumsulfatlösung sondern durch Gefrierfällung auf einer Scherbeneismaschine, anschließender 30-minütiger Sinterung bei 121 °C und darauf folgende Abkühlung auf 60°C. Anschließend wurde Wasser auf einer Schleuder abgeschleudert. Der derart vorentwässerte Butadien-Pfropfkautschuk (Restfeuchtegehalt ca. 30 Gew.-%) wurde abschließend im warmen Luftstrom getrocknet.

### Herstellung eines Acrylat-Pfropfkautschuks H:

17,5 Gew.-Teile Butylacrylat und 0,1 Gew.-Teil Allylmethacrylat wurden in 150 Gew.-Teilen Wasser unter Zusatz von 0,2 Gew.-Teilen Kaliumstearat, 0,3 Gew.-Teilen Kaliumpersulfat, 0,3 Gew.-Teile Natriumhydrogencarbonat und 0,15 Gew.-Teilen Natriumpyrophosphat unter Rühren auf 60°C erwärmt. 10 Minuten nach dem Anspringen der Polymerisationsreaktion wurden innerhalb von 3 Stunden eine Mischung aus 82 Gew.-Teilen Butylacrylat und 0,4 Gew.-Teile Allylmethacrylat zugegeben. Nach Beendigung der Monomerzugabe wurde noch eine Stunde nachpolymerisiert. Zu einer Vorlage aus 2,5 Gew.-Teilen des so erhaltenen Kautschuklatex wurden nach Zugabe von 50 Gew.-Teilen Wasser und 0,1 Gew.-Teilen Kaliumperoxodisulfat im Verlauf von 3 Stunden gleichzeitig und separiert voneinander sowohl eine Mischung aus 49 Gew.-Teilen Butylacrylat und 0,25 Gew.-Teilen Allylmethacrylat, als auch eine Lösung von 0,5 Gew.-Teilen Kaliumstearat in 25 Gew.-Teilen Wasser bei 60°C zudosiert. Nach Dosierende wurde 2 Stunden nachpolymerisiert. 150 Gew.-Teile des so erhaltenen Kautschuklatex wurden mit 20 Gew.-Teilen Styrol und 60 Gew.-Teilen Wasser gemischt und unter Rühren nach Zusatz von weiteren 0,03 Gew.-Teilen Kaliumperoxodisulfat und 0,05 Gew.-Teiten Lauroylperoxid 3 Stunden auf 65°C erhitzt. Diese Pfropfmischpolymerisatdispersion wurde ohne weitere Zusatzstoffe mit 20 Gew.-Teilen einer Mischung aus Styrol und Acrylnitril (Gew.-Verhältnis 75:25) weitere 3 Stunden polymerisiert. Nach Beendigung der Pfropfmischpolymerisation wurde der Acrylat-Pfropfkautschuk mittels Magnesiumsulfatlösung bei 91°C aus der Dispersion gefällt und im warmen Luftstrom getrocknet.

### Herstellung eines Acrylat-Pfropfkautschuks I:

Die Herstellung des Acrylat-Pfropfkautschuks I erfolgte bis zur Beendigung der Pfropfmischpolymerisation wie bei der Herstellung des Acrylat-Pfropfkautschuks H beschrieben. Die anschließende Fällung des Acrylat-Pfropfkautschuks I aus der Dispersion erfolgte jedoch nicht mittels Magnesiumsulfatlösung sondern durch Gefrierfällung auf einer Scherbeneismaschine, anschließender 30-minütiger Sinterung bei 121°C und darauf folgende Abkühlung auf 60°C. Anschließend wurde Wasser auf einer Schleuder abgeschleudert. Der derart vorentwässerte Acrylat-Pfropfkautschuk (Restfeuchtegehalt ca. 30 Gew.-%) wurde abschließend im warmen Luftstrom getrocknet.

### Herstellung von Formmassen F und Vergleichsformmassen V-F:

### Herstellung von Vergleichsformmasse V-F-C (ABS):

48 Gew.-Teile des getrockneten Butadien-Pfropfkautschuks A wurden mit 52 Gew.-Teilen eines Granulats eines handelsüblichen Styrol-Acrylnitril-Copolymers mit einem Acrylnitrilgehalt von 24 Gew.-% und einer Viskositätszahl von 64 bei 250°C auf einem Zweiwellenextruder ZSK 30 extrudiert und granuliert. Der Gehalt an Magnesium im Granulat betrug 510 mg/kg, der Gehalt an Calcium im Granulat betrug < 3 mg/kg.

### Herstellung von Formmasse F-D (ABS):

48 Gew.-Teile des getrockneten Butadien-Pfropfkautschuks B wurden mit 52 Gew.-Teilen eines Granulats eines handelsüblichen Styrol-Acrylnitril-Copolymers mit einem Acrylnitrilgehalt von 24 Gew.-% und einer Viskositätszahl von 64 bei 250°C auf einem Zweiwellenextruder ZSK 30 extrudiert und granuliert. Der Gehalt an Magnesium im Granulat betrug < 3 mg/kg, der Gehalt an Calcium im Granulat betrug < 3 mg/kg.

### Herstellung von Formmasse F-E (ABS):

20 Gew.-Teile des getrockneten Butadien-Pfropfkautschuks B wurden mit 20 Gew.-Teilen eines Granulats eines handelsüblichen Styrol-Acrylnitril-Copolymers mit einem Acrylnitrilgehalt von 24 Gew.-% und einer Viskositätszahl von 64 und 60 Gew.-Teilen eines α-Methylstyrol-Acrylnitril-Copolymers mit einem Acrylnitrilgehalt von 30 Gew.-% und einer Viskositätszahl von 57 bei 250°C auf einem Zweiwellenextruder ZSK 30 extrudiert und granuliert. Der Gehalt an Magnesium im Granulat betrug < 3 mg/kg, der Gehalt an Calcium im Granlat betrug < 3 mg/kg.

### Herstellung von Vergleichsformmasse V-F-J (ASA):

45 Gew.-Teile des getrockneten Acrylat-Pfropfkautschuks H wurden mit 50 Gew.-Teilen eines Granulats eines handelsüblichen Styrol-Acrylnitril-Copolymers mit einem Acrylnitrilgehalt von 19 Gew.-% und einer Viskositätszahl von 100 bei 250°C auf einem Zweiwellenextruder ZSK 30 extrudiert und granuliert. Der Gehalt an Magnesium im Granulat betrug 370 mg/kg, der Gehalt an Calcium im Granulat betrug < 3 mg/kg.

### Herstellung von Formmasse F-K (ASA):

Die Herstellung von Formmasse F-K erfolgte wie die der Vergleichsformmasse V-F-J, wobei aber an Stelle des Acrylat-Pfropfkautschuks H der Acrylat-Pfropfkautschuk I eingesetzt wurde. Der Gehalt an Magnesium im Granulat betrug <3 mg/kg, der Gehalt an Calcium im Granulat betrug < 3 mg/kg.

### Herstellung von Vergleichsformmasse V-F-L (ASA):

45 Gew.-Teile des getrockneten Acrylat-Pfropfkautschuks H wurden mit 55 Gew.-Teilen eines Granulats eines handelsüblichen Styrol-Acrylnitril-Copolymers mit einem Acrylnitrilgehalt von 35 Gew.-% und einer Viskositätszahl von 80 bei 250°C auf einem Zweiwellenextruder ZSK 30 extrudiert und granuliert. Der Gehalt an Magnesium im Granulat betrug 360 mg/kg, der Gehalt an Calcium im Granulat betrug < 3 mg/kg.

### Herstellung von Formmasse F-M (ASA):

Die Herstellung von Formmasse F-M erfolgte wie die der Vergleichsformmasse V-F-L, wobei aber an Stelle des Acrylat-Pfropfkautschuks H der Acrylat-Pfropfkautschuk I eingesetzt wurde. Der Gehalt an Magnesium im Granulat betrug <3 mg/kg, der Gehalt an Calcium im Granulat betrug < 3 mg/kg.

### Herstellung von Vergleichsformmasse V-F-N (ASA/PC-Blend):

20 Gew.-Teile des getrockneten Acrylat-Pfropfkautschuks H wurden mit 20 Gew.-Teilen eines Granulats eines handelsüblichen Styrol-Acrylnitril-Copolymers mit einem Acrylnitrilgehalt von 35 Gew.-% und einer Viskositätszahl von 80 und 60 Gew.-Teilen eines Granulats eines handelsüblichen Polycarbonats, Makrolon^{®} 2800 der Bayer Material Science AG, bei 250°C auf einem Zweiwellenextruder ZSK 30 extrudiert und granuliert. Der Gehalt an Magnesium im Granulat betrug 135 mg/kg, der Gehalt an Calcium im Granulat betrug < 3 mg/kg.

### Herstellung von Formmasse F-O (ASA/PC-Blend):

8,5 Gew.-Teile des getrockneten Acrylat-Pfropfkautschuks H wurden mit 8,5 Gew.-Teilen des getrockneten Acrylat-Pfropfkautschuks I, 13 Gew.-Teilen eines Granulats eines handelsüblichen Styrol-Acrylnitril-Copolymers mit einem Acrylnitrilgehalt von 19 Gew.-% und einer Viskositätszahl von 70 und 60 Gew.-Teilen eines Granulats eines handelsüblichen Polycarbonats, Makrolon^{®} 2800 der Bayer Material Science AG, bei 250°C auf einem Zweiwellenextruder ZSK 30 extrudiert und granuliert. Der Gehalt an Magnesium im Granulat betrug 36 mg/kg, der Gehalt an Calzium im Granulat betrug < 3 mg/kg.

### Herstellung von Formmasse F-P (ASA/PC-Blend):

30 Gew.-Teile des getrockneten Acrylat-Pfropfkautschuks I wurden mit 10 Gew.-Teilen eines Granulats eines handelsüblichen Styrol-Acrylnitril-Copolymers mit einem Acrylnitrilgehalt von 19 Gew.-% und einer Viskositätszahl von 70 und 60 Gew.-Teilen eines Granulats eines handelsüblichen Polycarbonats, Makrolon^{®} 2800 der Bayer Material Science AG, bei 250°C auf einem Zweiwellenextruder ZSK 30 extrudiert und granuliert. Der Gehalt an Magnesium im Granulat betrug <3 mg/kg, der Gehalt an Calcium im Granulat betrug < 3 mg/kg.

### Herstellung von Vergleichsformmasse V-F-Q (MABS):

Es wurde ein Granulat eines handelsüblichen PMMA/ABS-Blends, Terlux^{®} BX 13010 der BASF SE, eingesetzt. Der Gehalt an Magnesium im Granulat betrug 212 mg/kg, der Gehalt an Calcium im Granulat betrug < 3 mg/kg.

### Meßmethoden:

### Bestimmung der Magnesium- und Calciumgehalte:

Die Magnesium- und Calciumgehalte der obengenannten Formmassen F und der Vergleichsformmassen V-F wurden bestimmt, indem eine jeweils ausgewogene Menge des betreffenden Kunststoffgranulats verbrannt wurde, der Verbrennungsrückstand einem Soda-Borax-Aufschluß unterworfen wurde, anschließend der Aufschlußrückstand in Salzsäure gelöst wurde, und der Mg- und Ca-Gehalt der salzsauren Lösung mittels Atomemissionsspektrometrie mit induktiv gekoppeltem Plasma (ICP-AES) bestimmt wurde.

### Formteilherstellung und Formbelagsbildung:

Zur Bestimmung der Formbelagsbildung bei der Formteilherstellung wurden die obengenannten Formmassen F und Vergleichsformmassen V-F als Granulat unter identischen Bedingungen in eine Spritzgießmaschine dosiert, aufgeschmolzen und in einer Zugstabs-Bindenaht-Form ohne Entgasungsöffnungen verspritzt. Das Anspritzen des Zugstabs erfolgte in dieser Form von den beiden Kopfseiten her, so daß sich die beiden Schmelzfronten in der Mitte der Form trafen und eine Bindenaht ergaben. Nach jeweils 500 Schüssen, d.h. spritzgegossenen Zugstäben, wurde die Form ausgebaut, die in der Umgebung der Bindenaht auftretenden Formbeläge visuell begutachtet und gemäß einer Skala von 1 (sehr gut, keine Formbeläge) bis 6 (mangelhaft, starke Formbeläge) beurteilt. Die jeweiligen Beurteilungen werden in Tabelle 1 widergegeben.

**Tabelle 1*:**

| Beispiel | Formmasse | Ca-Gehalt der Formmasse [mg/kg] | Mg-Gehalt der Formmasse [mg/kg] | Beurteilung der Formbelagsbildung |
|---|---|---|---|---|
| V-1 | V-F-C | <3 | 510 | 5 |
| 2 | F-D | <3 | <3 | 2 |
| 3 | F-E | <3 | <3 | 2 |
| V-4 | V-F-J | <3 | 370 | 4-5 |
| 5 | F-K | < 3 | <3 | 2 |
| V-6 | V-F-L | <3 | 360 | 4-5 |
| 7 | F-M | <3 | <3 | 2 |
| V-8 | V-F-N | 11 | 135 | 3 |
| 9 | F-O | 5 | 36 | 2-3 |
| 10 | F-P | 8 | <3 | 2 |
| V-11 | V-F-Q | <3 | 212 | 4 |

| | | | | |
|---|---|---|---|---|
| * Beispiele und Formmassen mit vorangestelltem "V-" sind nicht erfindungsgemäß und dienen zum Vergleich | | | | |

Die Beispiele belegen, daß die erfindungsgemäßen Verfahren zur Herstellung von Formteilen durch Formgebung thermoplastischer Formmassen F gegenüber den bekannten Verfahren eine verringerte Belagsbildung am Formgebungswerkzeug und/oder der Formteiloberfläche ausweisen.

## Patentansprüche

1. Verfahren zur Herstellung von Formteilen durch Formgebung thermoplastischer Formmassen F mit verringerter Belagsbildung am Formgebungswerkzeug, **dadurch gekennzeichnet, daß** die thermoplastischen Formmassen F mindestens eine Magnesium- und/oder Calciumverbindung in einer Menge von 3 mg/kg bis 75 mg/kg (gerechnet als Summe der mg Mg und der mg Ca pro kg thermoplastischer Formmasse F und bestimmt mittels Atomemissionsspektrometrie mit induktiv gekoppeltern Plasma (ICP-AES)) enthalten.

2. Verfahren gemäß Anspruch 1, **dadurch gekennzeichnet, daß** die thermoplastischen Formmassen F neben der mindestens einen Magnesium- und/oder Calciumverbindung
A) 20 bis 100 Gew.-% mindestens eines schlagzähmodifizierten vinylaromatischen Copolymers ausgewählt aus der Gruppe Acrylnitril-Butadien-Styrol-Copolymere (ABS), Acrylnitril-Styrol-Acrylat-Copolymere (ASA) und Methacrylat-Acrylnitril-Butadien-Styrol-Copolymere (MABS),
B) 0 bis 80 Gew.-% mindestens eines Polycarbonats (PC) und
C) 0 bis 60 Gew.-% weiterer kunststoffüblicher Zusatzstoffe enthalten,
wobei die Gewichtsprozente jeweils auf das Gesamtgewicht der Komponenten A) bis C) bezogen sind und zusammen 100 Gew.-% ergeben.

3. Verfahren gemäß Ansprüchen 1 bis 2, **dadurch gekennzeichnet, daß** die Formgebung durch Extrusion zu Granulat, Folien, Platten, Strängen oder Profilen erfolgt.

4. Verfahren gemäß Ansprüchen 1 bis 2, **dadurch gekennzeichnet, daß** die Formgebung durch Spritzguß zu Formkörpern erfolgt.

5. Verwendung von Formmassen F enthaltend mindestens eine Magnesium- und/oder Calciumverbindung in einer Menge von 3 mg/kg bis 75 mg/kg (gerechnet als Summe der mg Mg und der mg Ca pro kg thermoplastischer Formmasse F und bestimmt mittels Atomemlssionsspektrometne mit induktiv gekoppeltem Plasma (ICP-AES)) zur Verringerung der Belagsbildung am Formgebungswerkzeug bei der Herstellung von Formteilen.

6. Formteile, herstellbar nach einem der Verfahren gemäß Ansprüchen 1 bis 4.

7. Thermoplastische Formmassen F zur Herstellung von Formteilen nach Verfahren gemäß Ansprüchen 1 bis 4, enthaltend mindestens eine Magnesium- und/oder Calciumverbindung in einer Menge von 3 mg/kg bis 75 mg/kg (gerechnet als Summe der mg Mg und der mg Ca pro kg thermoplastischer Formmasse F und bestimmt mittels Atomemissionsspektrometrie mit induktiv gekoppeltem Plasma (ICP-AES)).

## Claims

1. A process for the production of moldings via shaping of thermoplastic molding compositions F with reduced formation of deposit on the shaping mold, wherein the thermoplastic molding compositions F comprise an amount of from 3 mg/kg to 75 mg/kg (calculated as the total of the mg of Mg and the mg of Ca per kg of thermoplastic molding composition F and determined by means of atomic emission spectrometry using inductively coupled plasma (ICPAES)) of at least one magnesium compound and/or calcium compound.

2. The process according to claim 1, wherein the thermoplastic molding compositions F comprise, alongside the at least one magnesium compound and/or calcium compound,
A) from 20 to 100% by weight of at least one impact-modified vinylaromatic copolymer selected from the group of acrylonitrile-butadiene-styrene copolymers (ABS), acrylonitrile-styrene-acrylate copolymers (ASA), and methacrylate-acrylonitrile-butadiene-styrene copolymers (MABS),
B) from 0 to 80% by weight of at least one polycarbonate (PC), and
C) from 0 to 60% by weight of further additives conventional in plastics,
where each of the percentages by weight is based on the total weight of components A) to C) and the total of the percentages by weight is 100% by weight.

3. The process according to claims 1 to 2, wherein the shaping takes place via extrusion to give pellets, foils, sheets, strands, or profiles.

4. The process according to claims 1 to 2, wherein the shaping takes place via injection-molding to give moldings.

5. The use of molding compositions F comprising an amount of from 3 mg/kg to 75 mg/kg (calculated as the total of the mg of Mg and the mg of Ca per kg of thermoplastic molding composition F and determined by means of atomic emission spectrometry using inductively coupled plasma (ICPAES)) of at least one magnesium compound and/or calcium compound, for reducing the formation of deposit on the shaping mold during the production of moldings.

6. A molding that can be produced by one of the processes according to claims 1 to 4.

7. A thermoplastic molding composition F for the production of moldings by processes according to claims 1 to 4, comprising an amount of from 3 mg/kg to 75 mg/kg (calculated as the total of the mg of Mg and the mg of Ca per kg of thermoplastic molding composition F and determined by means of atomic emission spectrometry using inductively coupled plasma (ICPAES)) of at least one magnesium compound and/or calcium compound.

## Revendications

1. Procédé de production de pièces moulées par moulage de composition thermoplastique pour moulage F ne donnant lieu qu'à une formation réduite de dépôts sur l'outil de formage, **caractérisé en ce que** la composition thermoplastique pour moulage F contient au moins un composé à base de magnésium et/ou de calcium en une proportion de 3 mg/kg à 75 mg/kg [calculée comme la somme des mg de Mg et des mg de Ca par kg de composition thermoplastique pour moulage F et déterminée par spectrométrie d'émission atomique à plasma à couplage inductif (ICP-AES))]

2. Procédé selon la revendication 1, **caractérisé en ce que** les masses thermoplastiques pour moulage F outre au moins un composé de magnésium et/ou de calcium, contiennent:
A) 20 à 100 % en poids d'au moins un copolymère vinylaromatique à résistance au choc modifiée choisi dans le groupe constitué par l'acrylonitrile-butadiène-styrène (ABS), les copolymères acrylonitrile-styrène-acrylate (ASA) et les copolymères méthacrylate-acrylonitrile-butadiène-styrène (MABS),
B) 0 à 80 en % en poids d'au moins un polycarbonate (PC) et
C) 0 à 60 % en poids d'un autre des additifs plastiques courant,
procédé dans lequel les pourcentages en poids sont exprimés par rapport au poids total des composants A) à C) et forment ensemble 100 % en poids.

3. Procédé selon les revendications 1 ou 2, **caractérisé en ce que** la mise en forme a lieu par extrusion en granulés, films, feuilles, plaques, joncs ou profilés.

4. Procédé selon les revendications 1 à 3, **caractérisé en ce que** la mise en forme pour obtenir des pièces moulées se fait par moulage par injection.

5. Utilisation de matières pour moulage F contenant au moins un composé à base de magnésium et/ou de calcium en une proportion de 3 mg/kg à 75 mg/kg [calculée comme la somme des mg de Mg et des mg de Ca par kg de composition thermoplastique pour moulage F et déterminée par spectrométrie d'émission atomique à plasma à couplage inductif (ICP-AES)] pour réduire la formation de dépôts sur l'outil de formage lors de la fabrication de pièces moulées.

6. Pièces moulées obtenues par un procédé selon l'une des revendications 1 à 4.

7. Composition thermoplastique pour moulage F pour la fabrication de pièces moulées par un procédé selon les revendications 1 à 4, contenant des composés du magnésium et/ou de calcium en une proportion de 3 mg / kg à 75 mg / kg [calculée comme la somme des mg de Mg et de Ca mg par kg de composition de moulage thermoplastique F et déterminée par spectrométrie d'émission atomique à plasma à couplage inductif (ICP-AES)].
